# EUROPEAN PATENT APPLICATION

(11) **EP 1 271 415 A1**
(43) Date of publication of application: **02.01.2003**
(21) Application number: 02394044.8
(22) Date of filing: 26.04.2002
(51) Int. Cl.: G06T 17/40

(54) **Parts assembly virtual representation and content creation**

(30) Priority: 20.06.2001 US 885399
(71) Applicant: Gateway, Inc., North Sioux City, South Dakota 57049 (US)
(72) Inventor: McKnight, Russell F., Sioux City, IA 51104 (US); Anderson, Glen J., Sioux City, IA 51104 (US)
(74) Representative: McCarthy, Denis Alexis

(57) **Abstract**

A system and method for rendering a virtual model employs construction elements capable of identifying themselves that are assembled together to form a physical model. At least one controller, which may be disposed within a construction element of the assembled physical model, obtains the identities of at least a portion of the assembled construction elements and detects connections between these identified elements. The controller then communicates the identities of the construction elements and their associated connections with each other to an information handling system suitable for executing a program of instructions for rendering the virtual model corresponding to the assembled physical model.

## Description

### Field of the Invention

The present invention generally relates to systems and methods for generating virtual models utilizing information handling systems, and more particularly to a system and method for generating a virtual model using input from a physical model assembled from construction elements that are capable of detecting connection with each other.

### Background of the Invention

The increasing pervasiveness of media such as computer gaming, computer animation and the like requires the development of easy-to-use, and cost effective methods of rendering three-dimensional graphics. Presently, virtual models (i.e., models generated by computers) employing three-dimensional graphics are rendered using two basic methods.

In the first method, a user, such as a computer game designer, computer animator, or the like, designs the model by manually drawing each element of the model using a specialized software application. This method allows substantial artistic freedom, but can be labor intensive and time consuming, especially for large projects such as animated movie or complex gaming applications requiring the rendering of large numbers of sophisticated models. Further, all but the most sophisticated software applications utilizing this method cannot produce detailed animated models that are capable of realistic motion.

The second method was developed by animators primarily to overcome limitations of manually drawing the object using the first method. This second method, known in the art as "digitizing", involves generating a three-dimensional image of an object, person, or the like by measuring the location of points on the object using a scanning device or "digitizer" to create a mesh representation of the object that is manipulable by a computer system. Digitizing of objects allows three-dimensional mesh models of objects to be created more efficiently than possible by manually drawing the object using the first method. However, because the model created is a representation of a real object, person, or the like, the creative freedom of the user is more limited.

### Summary of the Invention

The present invention is directed to a system and method capable of efficiently and cost effectively generating a three-dimensional virtual model representing a real object wherein the object represented may be assembled by the user in a variety of configurations. In this manner, the system and method provide a greater degree of artistic freedom than present digitization techniques, and allow physical creations to be translated to an electronic medium without the use of external scanning devices, and optionally shared as a recorded file.

In exemplary embodiments, construction elements that are capable of identifying themselves are assembled together to form a physical model. At least one controller, which may be disposed within a construction element of the assembled physical model, obtains the identities of at least a portion of the assembled construction elements and detects connections between these elements. The controller then communicates information providing the identities of the construction elements and their associated connections with each other to an information handling system capable of executing a program of instructions for using the communicated information to render a virtual model corresponding to the assembled physical model. In embodiments of the invention, a self-contained power system may be provided for powering the construction elements and controller.

Embodiments of the system and method of the present invention may be adapted for use in entertainment and/or educational purposes, for example, as a child's toy or game. Other embodiments of the system and method may be adapted for professional and industrial design applications for generating sophisticated three-dimensional virtual models in applications such as computer gaming, computer animation and the like.

It is to be understood that both the foregoing general description and the following detailed description are exemplary and explanatory only and are not restrictive of the invention as claimed. The accompanying drawings, which are incorporated in and constitute a part of the specification, illustrate an embodiment of the invention and together with the general description, serve to explain the principles of the invention.

### Brief Description of the Drawings

The present invention may be better understood by those skilled in the art by reference to the accompanying figures in which:
FIG. 1 is an isometric view illustrating a system for generating a virtual model using input from construction elements that are assembled into a physical model in accordance with an exemplary embodiment of the present invention;
FIGS. 2A and 2B are diagrammatic views illustrating the generation of a virtual model by assembly of construction elements into a physical model in accordance with an exemplary embodiment of the present invention;
FIG. 3 is a diagrammatic view illustrating movement of the virtual model in response to movement of the physical model or construction elements of the physical model;
FIG. 4 is an isometric view illustrating the assembly of construction elements of an exemplary system in accordance with the present invention, wherein a single controller is provided by a master construction element to which other construction elements are assembled;
FIG. 5 is an isometric view illustrating the assembly of construction elements of an exemplary system in accordance with the present invention, wherein each construction element is provided with a separate controller;
FIG. 6 is an isometric view illustrating exemplary connectors of the construction elements shown in FIGS. 1 though 5;
FIG. 7 is a flow diagram illustrating a method for generating a virtual model using input from construction elements that are assembled into a physical model in accordance with an exemplary embodiment of the present invention; and
FIG. 8 is a block diagram illustrating an exemplary information appliance suitable for implementation of the system and method of the present invention.

### Detailed Description of the Invention

Reference will now be made in detail to the presently preferred embodiments of the invention, examples of which are illustrated in the accompanying drawings.

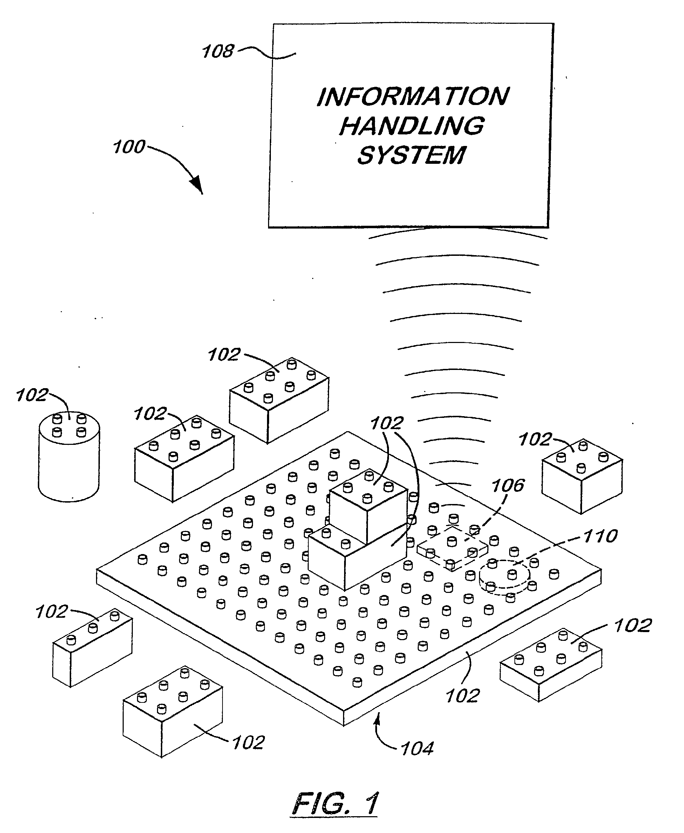

Referring now to FIG. 1, a system in accordance with an exemplary embodiment of the present invention is described. The system 100 includes a plurality of construction elements 102 that may be assembled together for forming a physical model 104. Construction elements 102 are preferably sized to be easily manipulated by the user, although large construction elements are contemplated and would not depart from the scope and spirit of the invention. At least some of construction elements 102 are capable of identifying themselves within the physical model 104. For instance, each construction element may include a memory device such as a ROM (Read-Only-Memory) device, PROM (Programmable Read-Only-Memory) device, EPROM (Erasable Programmable Read-Only-Memory) device or the like, which is capable of providing the identity and, optionally, information providing attributes to the construction element 102.

A controller 106 is disposed within at least one construction element 102 to be assembled into the physical model 104. The controller 106 obtains the identities of at least a portion of the assembled construction elements 102, and detects connections between the construction elements 102 for which identities are obtained. For instance, the controller may interrogate the memory device of each construction element 102 assembled into the physical model 104 for obtaining the identity of the construction element 102 and connections of the construction element 102 with adjacent construction elements 102. Connections among construction elements 102 may be wired or wireless. For example, in embodiments of the invention, controller 106 may sense the presence and connection of construction elements 102 by detecting the proximal distance of the elements from each other, and/or by sensing mechanical displacement within connectors.

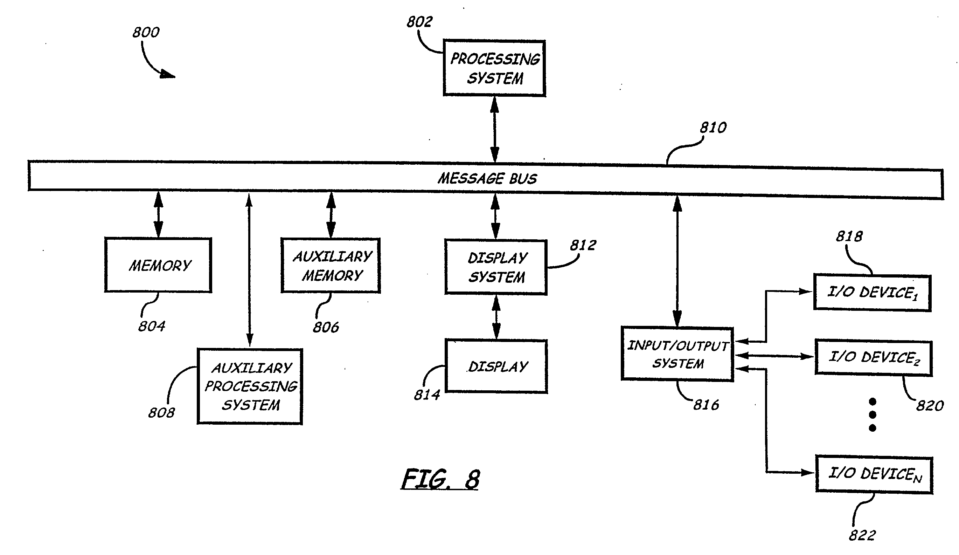

Controller 106 periodically communicates information including the obtained identities of the assembled construction elements 102 and information identifying their associated connections with other elements 102 to an information handling system 108 (e.g., via a wireless transmission, a wired connection, or the like). For instance, controller 108 may include, or be coupled to a radio transmitter for transmitting the information wirelessly to a receiver coupled to the information handling system 108 (see FIG. 8). In embodiments of the invention, the radio transmitter and receiver may utilize any of a variety of transmission standards such as Bluetooth, Home RF SWAP (Shared Wireless Access Protocol), DECT (Digital Enhanced Cordless Telephone), and the like, for encoding, transmitting, receiving, and decoding the communicated information. Information handling system 108 may then execute a software application providing a program of instructions for rendering a virtual model 110 corresponding to the assembled physical model 104 utilizing the information communicated by controller 106. Preferably, the software application assembles the virtual representations of construction elements 102 in the same manner that the construction elements 102 are assembled in physical model 104. This assembly is accomplished by connecting the virtual representations of construction elements 102 in the same manner as the construction elements 102 are themselves connected using the connection information received from controller 106.

It will be appreciated that in some instances, incomplete or conflicting information describing physical model 104 may be provided by controller 106. For instance, information provided by controller 106 may leave some ambiguity about the physical arrangement of construction elements 102 within physical model 104 (e.g., a construction element 102 is not functioning properly and does not provide its identity, one or more construction elements assembled into the model are "dumb" construction elements and do not include a memory device, controller, or the like, connection information provided by controller 106 cannot be properly interpreted, etc.). In such cases, the software application may provide options for completing the virtual model. For example, the application may simply select the most probable configuration of construction elements 102 based on the information received. The application may also query the user for corrected information, instruct the user to reassemble physical model 104, for example, using different construction elements 102, or perform some like function for correcting the received information so that virtual model 112 may be correctly rendered.

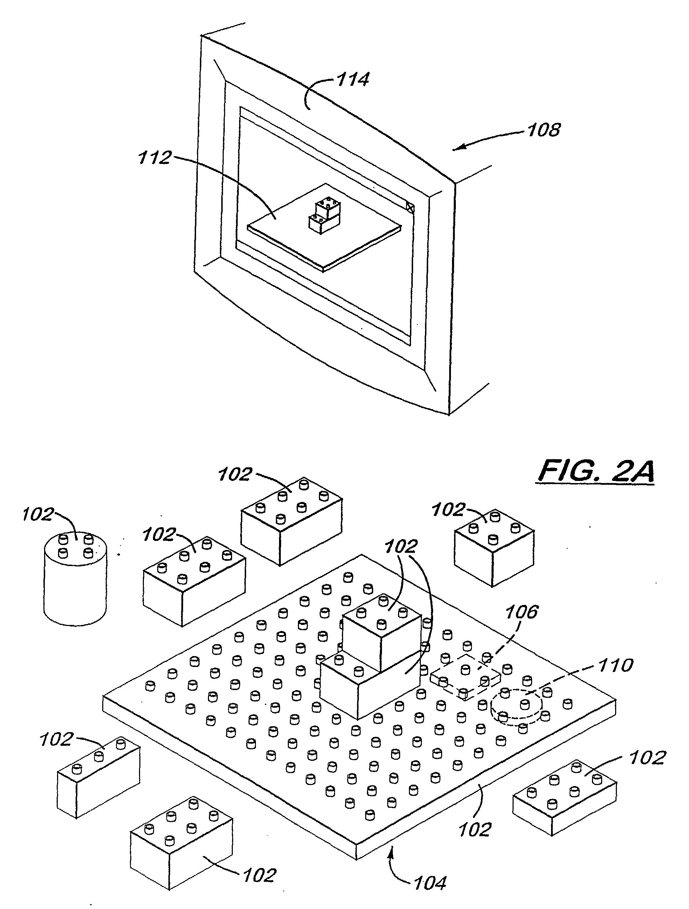

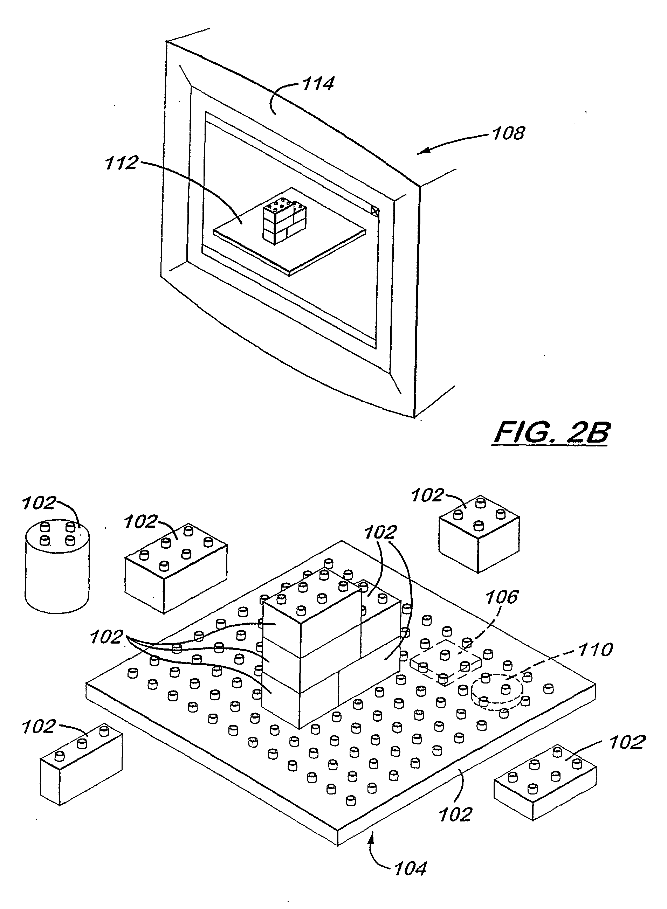

As shown in FIGS. 2A and 2B, virtual model 110 may be displayed by a display 112 of information handling system 108. Virtual model 110 may further be stored in memory of information handling system 108, stored to a removable medium by information handling system 108, or communicated to other information handling systems via a network for later use by the user or third parties (see FIG. 8). For instance, an electronic file similar to a CAD (Computer Aided Drafting) file may be saved to memory, on which is stored the information received from controller 106 and, optionally, information delineating the revisions or modifications made to virtual model 112 by the user after it is rendered. In embodiments of the invention, this file may be provided to a manufacturer (e.g., a company providing system 100 to the user), whereupon the manufacturer may use virtual model 112 as a template for production. Such production may, for example, employ computer aided manufacturing techniques such as computer aided machining and the like for efficiently producing the item or items desired. Examples of items that may be produced in this manner include custom designed toys, furniture, clothing, and the like, models used for engineering prototyping or testing, architectural models, and the like. In one business model, the user may pay a fee for production of items from virtual model 112, thereby providing an efficient method wherein custom items may be manufactured which would otherwise not be marketed.

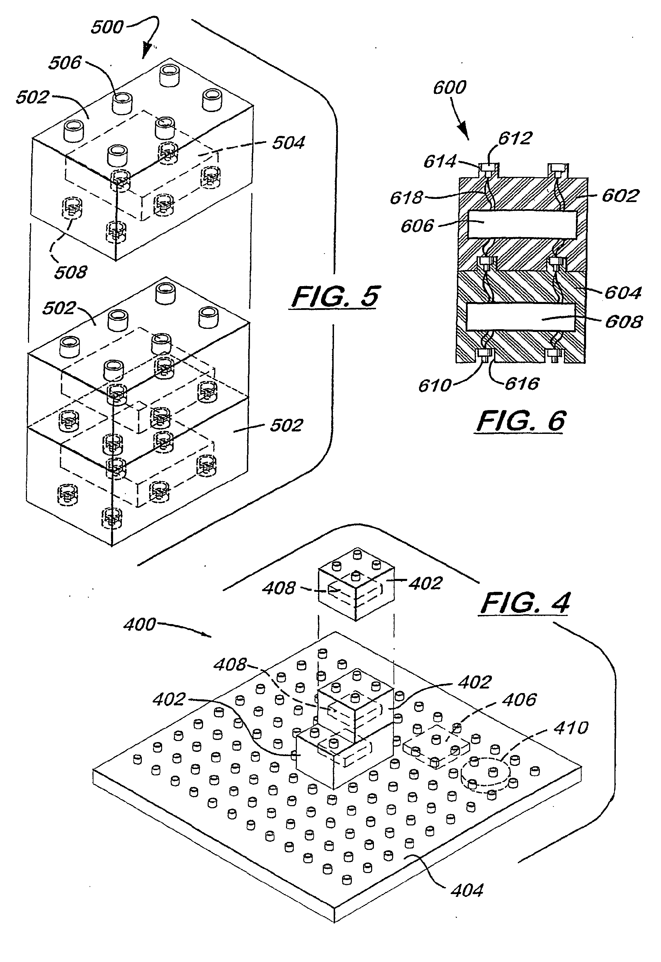

In embodiments of the invention, a self-contained power system may be provided for furnishing electrical power to the construction elements 102 (e.g., for powering memory devices within the construction elements 102) and controller 106. The power system may utilize electrical storage devices 114 such as batteries or the like, disposed within one or more of the construction elements 102. Electrical power may be transmitted to other construction elements through connections between the elements when assembled (see FIG. 4). Alternately, one or more of the construction elements 102 may include or be coupled to an AC (Alternating Current) converter so that the power system may utilize an external AC power source.

As shown in FIGS. 2A and 2B, the software application may render virtual model 112 in real time upon receiving information from controller 106. The software application may then revise or update the virtual model as additional information is received from controller 106, for example as the physical model 104 is completed or revised. In this manner, the user may view virtual model 110 as he or she assembles construction elements 102 into physical model 104. Alternately, the software application may store information communicated by the controller 106 and render virtual model 110 only when physical model 104 is fully assembled.

In embodiments of the invention, each construction element 102 includes a memory device (see FIGS. 4, 5 and 6) for storing the identity of the construction element. The memory device may additionally store actual attributes of the construction element (e.g., size, color, number of connectors, etc.), and, optionally, attributes to be assigned to the representation of the construction element within the virtual model 110 (e.g., virtual size, virtual shape, color, shape, surface texture, weight, electrical properties, thermal properties, and mechanical properties, dynamic properties, etc.). Alternately, the software application may include a database or databases containing attributes, and, optionally, virtual attributes for each construction element 102 within the system 100. Utilizing the identity information communicated by controller 106, the software application may interrogate this database for assigning the appropriate attributes to the virtual representation of each identified construction element 102 assembled into physical model 104.

Capabilities or behaviors of virtual model 112 may be enabled or disabled based upon the construction elements 102 used. In one embodiment, construction elements 102 may have electronically encoded characteristics that allow the user to select properties for their appearance in virtual model 112. For example, the user may select color and material properties for elements of virtual model 112 by selecting construction elements 102 with the desired characteristics for the physical model 104. Thus, a first construction element 102 may be rendered in virtual model 112 as having a surface of black rubber, while a second construction element 102 may be rendered as having a surface of chrome because those surface characteristics are provided by the construction elements 102 used. Similarly, non-motorized or non-moving construction elements 102 may be encoded as having motorized or moving behaviors, which may be enabled in the virtual representation of the element 102. For example, a construction element 102 might be provided with the behavior of a "motorized axle." When wheel construction elements are attached to this construction element, the virtual model of a vehicle rendered may be provided with motor power for movement. Additional encoding of construction elements 102 may be interpreted by the software application for providing special effects for virtual model 112 (e.g., a construction element comprised of a horn provides sound, a construction element comprised of a wing provides flight, a construction element comprised of a rocket engine provides sound, movement and smoke effect, etc.). In this manner, virtual model 112 may exceed the capabilities of the physical model 104 from which it is rendered in a virtual setting (e.g., the rendered virtual model 112 could be depicted as flying with no visible means of support).

Alternately, characteristics of the virtual representation of each construction element 102 may be selected by the user from options presented by the software application. Thus, virtual model 112 may be initially rendered without surface characteristics, and the user prompted to select the surface characteristics of the virtual representation of each construction element 102, or the virtual model 112 as a whole, from a style sheet providing a list of possible surface characteristics for elements within the system 100.

In exemplary embodiments, capabilities or characteristics of construction elements 102 may be periodically revised or upgraded. For example, a construction element 102 corresponding to the engine of an aircraft model may be upgraded from a piston engine to a turbine engine. In one business model, users may pay to upgrade the construction elements 102 of their systems 100 to provide more complex behavior, or to utilize newly created software. The characteristics or behaviors of each construction element 102 may be indicated by indicia on the surface of the element. If the characteristics or behaviors are changed, the indicia may be revised accordingly.

Once rendered, virtual model 112 may be manipulated or modified by the user. For instance, characteristics of the virtual representation of each construction element 102 may be selected by the user from options presented by the software application. Thus, virtual model 112 may be initially rendered without surface characteristics, and the user prompted to select the surface characteristics of the virtual representation of each construction element 102, or the virtual model 112 as a whole, from a style sheet providing a list of possible surface characteristics for elements within the system 100.

In embodiments of the invention, the user may further select characteristics affecting the appearance of the entire virtual model 112. For example, using sliding scales to interpolate the virtual representations of construction elements 102, the user may give the virtual model 112 a futuristic appearance, a curved "art nouveau" appearance, an antique appearance, or the like. Similarly, the user may apply effects to the virtual model using a variety of technologies known in the art of three-dimensional graphics. Such effects include, but are not limited to, changing the color of the model, changing the texture of the surface of the model, modifying the shape of the model (e.g., converting rectangular shapes to smooth curves, etc.), adding graphics to the model, adding motion to the model, and providing backgrounds against which the model is displayed.

Software applications executed by information handling system 108 may allow users to assign backgrounds, which would appear behind the virtual model 112 when rendered. For instance, groups of environments may be made available to the user based upon the type of model constructed (e.g., race tracks for automobiles, cityscapes for buildings, natural settings for animals, etc.). If virtual model 112 is animated, these backgrounds may change accordingly with the animated movements of virtual models. Further, once animated virtual models 112 are rendered in accordance with the present invention, they may be made to interact with each other to create an animated movie, video game, or the like. Such animated movies or video games may include voice-overs and sound effects, which may be added using techniques currently known to those of skill in the art of computer animation. Further, users may allow virtual models 112 to interact with each other to create virtual representations of these interactions. For instance, users may create virtual models of characters that have various attributes and capabilities, based upon the parts used and interaction among the attributes of the parts used. These characters may interact with other characters, created by other people, via a network such as the Internet or the like (i.e., online gaming).

Construction elements 102 may further include sensors capable of sensing and optionally measuring attributes (e.g., orientation, motion, speed, rotation, acceleration, temperature, strain, etc.) of the construction element 102 and/or physical model 104. For example, an inclinometer may be utilized for detecting the orientation of a construction element 102 to gravity so that virtual model 112 is rendered in the correct orientation. Similarly, an accelerometer may be provided for detecting movement of the construction element 102 and/or physical model 104 so that virtual model 112 is rendered in motion relative to a virtual background. Further, construction elements 102 may be comprised of two or more articulated components capable of movement with respect with each other. For example, a construction element 102 may comprise two components hinged together (e.g., a door), a component supporting a wheel on an axle, two components that slide with respect to one another (e.g., a double hung window), or the like. Sensors such as, for example, a Linear Variable Differential Transformer (LVDT), a Rotational Variable Differential Transformer (RVDT), or the like may be utilized for sensing and optionally measuring the relative position, orientation, speed, acceleration, or the like of one component with respect to the other.

In exemplary embodiments, the sensors are periodically interrogated by controller 106, and information describing the sensed attribute obtained. Alternately, the sensors may continuously update attribute measurements provided to controller 106. The controller 106 may then communicate this information to the information handling system, where it is used to render virtual model 112, so that virtual model represents the sensed attribute.

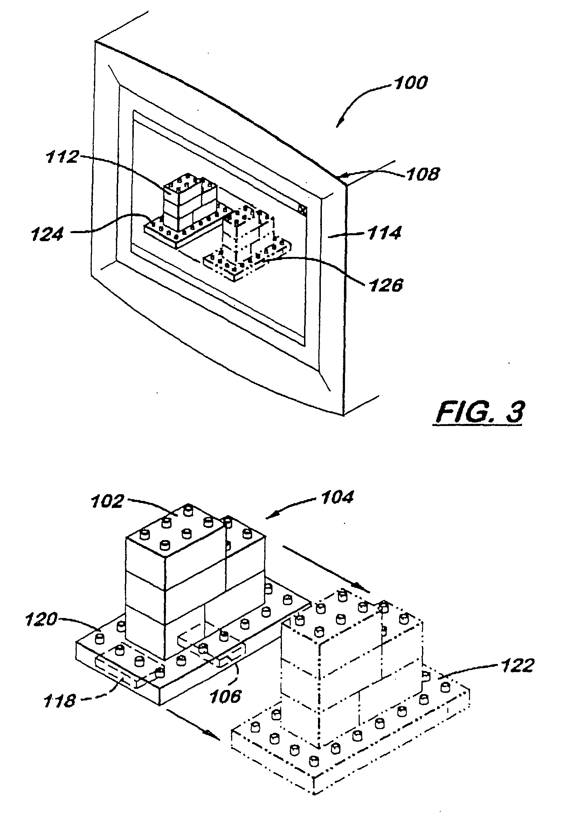

In FIG. 3, an example of the movement of a rendered virtual model in response to a corresponding movement of a physical model is shown. One or more of construction elements 102 may include a sensor 118 capable of detecting movement of the construction element 102 or of the assembled physical model 104. Sensor 118 is periodically interrogated by controller 106, and information describing the movement of the construction element 102 obtained, in this case, indicating translation of the construction element 102 from a first position 120 to a second position 122. The controller 106 communicates this information to the information handling system 108, whereupon virtual model 112 is translated from a first position 124 corresponding to the first position 120 of physical model 120 to a second position 126 corresponding to the second position of physical model 104. Movement of the virtual model 112 may be scaled compared to movement of the physical model 104 if desired by the user, or if deemed necessary for display of virtual model 112 by display 114.

It will be appreciated that, in exemplary embodiments of the invention, sensors 118 integrated into construction elements 102 may provide information for animating virtual model 112. For instance, the rotation of a construction element representing the wheel of an automobile may be detected and interpreted by the software application as indicating movement of a virtual model of an automobile. Similarly, a sensor 118 suitable for sensing the rotation of a construction element representing a propeller may be detected and interpreted to indicate flight of a virtual model of an aircraft.

Referring now to FIG. 4, a system in accordance with an exemplary embodiment of the invention is described wherein a master construction element provides a main system controller. System 400 includes construction elements 402 that may be assembled to a master or base construction element 402 for assembly of a physical model as described in the discussion of FIGS. 1 through 3. Master construction element 404 includes a system controller 406 (e.g., a microcontroller, microprocessor, or the like) while construction elements 402 each include memory devices or sub-controllers 408 (e.g., a microcontroller, a ROM, PROM, EPROM, or the like) for storing the identity of the construction element 402, and, optionally, information assigning desired attributes to the construction element 502. Preferably, memory device 408 may also be capable of sensing connection of other construction elements 402 to connectors of the construction element 402 in which it is disposed and identifying those connectors used in making the connection, whereupon this connection information may be stored in memory. Memory devices 402 are also capable of communication with controller 406 when construction elements 402 are assembled to master construction element 404. For instance, controller 406 may communicate with memory devices via a wired bus connection established through the interconnection of construction elements 402 assembled to master construction element 404. Alternately, the memory device 408 of each construction element 402 may include or be coupled to a transmitter or transceiver such as a Bluetooth radio, or the like, suitable for short-distance wireless communication with a receiver or second transceiver within the system controller 406.

System 400 may further include a self-contained power system for furnishing electrical power to the construction elements 402 for powering memory devices 408, and for providing electrical power to master construction element for powering controller 406. In the embodiment shown in FIG. 4, the power system includes an electrical storage device 410 such as a battery or the like, disposed within the master construction element 404. Preferably, electrical power from the storage device 410 is furnished to construction elements 402 assembled to master construction element 404 via connections between the assembled elements (see FIG. 6).

Controller 406 interrogates the memory device 408 of each construction element 402 for obtaining the identity of the construction element 402 and connections of the construction element 402 with adjacent construction elements 402. For instance, when construction elements 402 are connected together within the physical model being assembled, the memory device 408 within each construction element 402 may determine the identity of other construction elements 402 to which it is connected and the identification of connectors utilized in making the connections to those construction elements 402. Controller 406 may then periodically interrogate memory devices 408 for the identities of assembled construction elements 402 and the associated identity of the connectors used for connections between those elements 402. Controller 406 may next assemble an element map for the physical model, which is transmitted to the information handling system so that a virtual model corresponding to the physical model assembled from construction elements 402 & 404 may be rendered. As construction elements 402 are added to, moved, or removed from the physical model during its construction, controller may periodically update the element map to reflect the alterations allowing the information handling system to automatically update the virtual model rendered.

Turning now to FIG. 5, a system in accordance with a second exemplary embodiment the present invention is described wherein a plurality of construction elements within the system are provided with controllers. System 500 includes construction elements 502 that may be assembled to form a physical model as described in the discussion of FIGS. 1 through 3. As shown, each construction element 502 of system 500 includes a controller 504 comprised of a micro-controller, micro-processor, or the like, and a memory (e.g., a ROM, PROM, EPROM, or the like) for storing the identity of the construction element 502, and, optionally, information assigning desired attributes to the construction element 502. Each controller 504 may further include a transmitter or transceiver such as a Bluetooth radio or the like for communication with the information handling system, sensors such as sensor 118 (FIG. 1), and, optionally, controllers 504 of other construction elements 502.

System 500 may further include a self-contained power system for furnishing electrical power to the construction elements 502 for powering controllers 504 and any associated memories, transmitters, receivers, bus controllers, and the like coupled thereto. The power system may include an electrical storage device such as a battery or the like, disposed within one or more of the construction elements 502. Preferably, electrical power from the storage device is furnished to construction elements 502 which do not have storage devices via connections between the assembled elements (see FIG. 6).

Controllers 504 are capable of sensing connection of other construction elements 502 to connectors 506 & 508 of the construction element 502 in which they are disposed and identifying those connectors 506 & 508 used in making the connection, whereupon this connection information may be stored in memory and/or communicated to the information handling system coupled to the system 500. Similarly, each controller 504 may interrogate the controllers 504 of other construction elements for obtaining the identity of those construction elements 502. This identity information may then be correlated with the connection information stored in memory or communicated to the information handling system and used for generating an element map for the physical model. The element map may then be used for rendering a virtual model corresponding to the assembled physical. Again, as construction elements 502 are added to, moved, or removed from the physical model during its construction, controllers within the construction elements 502 may periodically update identity and connection information allowing the information handling system to automatically update the virtual model rendered.

Controllers 504 may further be capable of detecting the proximity or relative position of unconnected construction elements 502. For instance, one or more controllers 504 may include (or, optionally, be coupled to) a transceiver capable of periodically broadcasting a radio frequency pulse or ping that is received by the controllers of other construction elements 502. The amount of time elapsed between ping emission and reception may then be used for determining the distance between sending and receiving controllers 504. Where the ping is received by the controllers 504 of multiple construction elements, triangulation techniques may be used for determining the relative position of the construction elements 502, which may be represented in the virtual model.

Referring now to FIG. 6, the assembly of two construction elements together in accordance with an exemplary embodiment of the present invention is described. System 600 includes construction elements 602 & 604 that may be assembled to form a physical model as described in the discussion of FIGS. 1 through 5. Each construction element 602 & 604 includes a memory device 606, or, alternately, a controller, sub-controller, or the like as described in the discussion of FIGS. 4 and 5. Memory devices 606 are coupled to electrical connectors 610 & 612 disposed in post and receptacle connectors 614 & 616 via wires 618. In exemplary embodiments, when construction elements 602 & 604 are connected together by inserting the post connector 614 of one element 604 into the receptacle connector 616 of another 602, electrical connectors 610 & 616 are joined together creating an electrical circuit between the memory devices 606 of construction elements 402 & 404. In this manner, memory devices (or controller, sub-controller, etc.) 606 may communicate with each other for sharing identity and connection information, electrical power, or the like. When extrapolated to a system of multiple construction elements, the interconnection of electrical connectors 610 & 612 and wires 618 of assembled construction elements within a physical model may be used to provide a system bus for communication of identification and connection information with the central controller of a master construction element, and provision of electrical power.

In embodiments of the invention illustrated herein in FIGS. 1 through 6, construction elements of the present invention comprise small interlocking building blocks. For instance, in one specific embodiment, construction elements may be comprised of building blocks having a plurality of posts and receptacles formed therein, wherein the posts of one block are received into the receptacles of a second block, securing the blocks together for assembly of the blocks into a physical model. Such building blocks are commonly used as children's toys, a popular brand of which is sold under the trademark LEGO by Interlego AG, Baar, Switzerland. However, it should be appreciated that construction elements of the present invention are not limited to such building block configurations. Instead, it is contemplated that construction elements in accordance with the present invention may be provided having a wide range of shapes and sizes and utilizing a variety of connection techniques. For instance, in other embodiments of the invention, construction elements may comprise rods or tendons that may be joined by hub receivers having holes formed therein for receiving the tendons. The hubs may have multiple electrical connections so that the orientation of the tendon in the receiver may be detected. Such tendon and hub systems are also commonly used as children's toys, a popular brand of which is sold under the trademark TINKERTOY by Playschool, Inc., Pawtucket, Rhode Island. In such an embodiment, construction elements 102 may have a large number of shapes and sizes may be provided thereby allowing the user to assemble a variety of physical models. Further, construction elements may comprise specific parts of the object being modeled. Thus, a system suitable for modeling an automobile may include construction elements comprised of fenders, doors, hoods, engines, wheels, and the like; a system for modeling an aircraft may include construction elements comprised of wings, fuselages, engines, landing gears, and the like; and a system for modeling a computer system may include construction elements comprised of motherboards, circuit boards, keyboards, monitors, chassis, expansion boards, and the like.

Systems in accordance with the present invention may further allow multiple virtual models to be rendered by creating a corresponding number of physical models. In embodiments of the invention, these virtual models may be made to interact with one another in a virtual environment by measuring and duplicating interaction of the corresponding physical models. For example, in one embodiment, each physical model may include one or more construction elements that include a transponder, transceiver, or the like capable of periodically broadcasting a radio frequency pulse or ping that is received by the transponder, transceiver, or the like of a construction element assembled into a second model. The amount of time elapsed between ping emission and reception may then be used for determining the distance between the models using radio frequency delay techniques. Where the ping is received by the transponders of multiple construction elements, triangulation techniques may be used for determining the relative position of the various physical models. Further, the relative orientation of physical models may be determined by providing each model with at least two transponders that are spaced apart from one another. A central construction element (e.g., a base construction element) may be provided for receiving and synchronizing signals from multiple models in order to coordinate signals and to track relative distances, positions, and optionally orientations of the various physical models. In this manner, distance, position and orientation may be periodically sampled (e.g., using periodic pings) to record relative motion of the models with one another. In this manner, multiple virtual models capable of interaction with one another may be rendered.

In embodiments of the invention, virtual models may be rendered of physical models as they are taken apart or destroyed. For example, in one embodiment, physical models may be created for modeling failure mechanisms of the objects they represent (e.g., bridges, buildings, aircraft components, automobiles, etc.). Sensors within the construction elements used in building the physical model may detect physical conditions (e.g., forces, movements, temperatures, etc.) within the physical model during failure. In one specific embodiment, physical models of automobiles used as children's toys may be crashed together, or into stationary objects, causing parts such as, doors, hoods, bumpers, wheels, etc., implemented as construction elements in accordance with the present invention, to be thrown off. Preferably, the construction element parts forming the automobiles may be equipped with sensors for detecting physical conditions of the parts such as velocity, acceleration, position, orientation, and the like. In this manner, the motion of the various construction element parts may be recorded for generating an animated virtual model of the crash, for example, for representing a car accident or "demolition derby" in a computer animation or the like, which may include effects, such as explosions, sound, and the like.

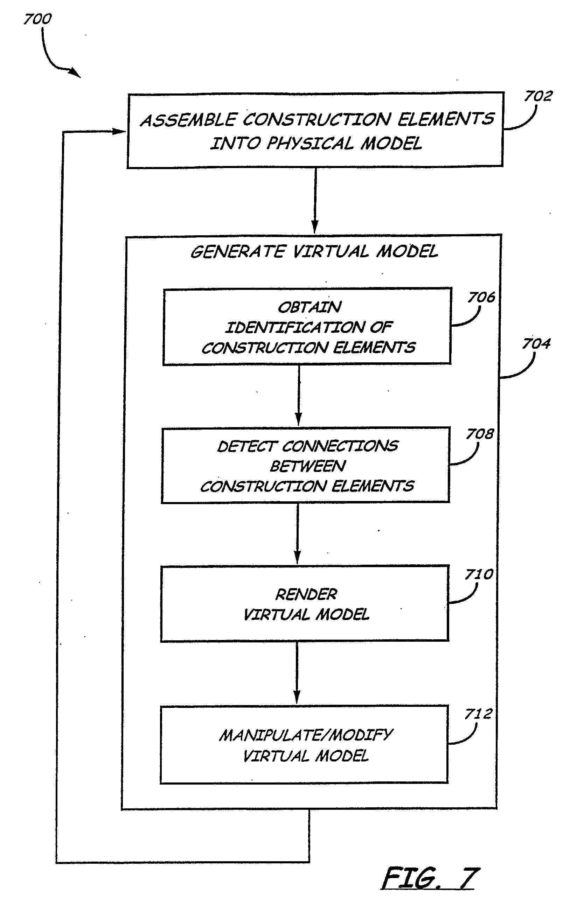

Referring now to FIG. 7, a method 700 for generating a virtual model using input from construction elements that are assembled into a physical model in accordance with an exemplary embodiment of the present invention is described. As shown, a user assembles construction elements together to form a physical model at step 702. To aid in construction, a construction file map may be used interactively to teach the user how to construct the model.

A virtual model representing the physical model assembled by the user is then generated at step 704. In exemplary embodiments, the virtual model is generated by obtaining the identification, and, optionally, the attributes of construction elements assembled into the physical model at step 706. Connections between each of the identified construction elements within the physical model are then detected at step 708 and associated with the identified construction element. As described in the discussion of the systems of FIGS. 1 through 6, step 706 and 708 may be accomplished by interrogating a memory device, controller or like device disposed in the construction elements to obtain the identity of the construction element, attributes and connection information. This information is then communicated to an information handling system where it is used for rendering the virtual model 710. The virtual model, once rendered, may then be manipulated or modified by the user at step 712. For instance, the user may apply effects to the virtual model using a variety of technologies known in the art of three-dimensional graphics. Such effects include, but are not limited to, changing the color of the model, changing the texture of the surface of the model, modifying the shape of the model (e.g., converting rectangular shapes to smooth curves, etc.), adding graphics to the model, adding motion to the model, and providing backgrounds against which the model is displayed. Further, steps 702 though 712 may be repeated as necessary as construction elements are added to, moved, or removed from the physical model so that the virtual model may be revised.

It is understood that the specific order or hierarchies of steps in the methods disclosed are examples of exemplary approaches. Based upon design preferences, it is understood that the specific order or hierarchy of steps in the method can be rearranged while remaining within the scope of the present invention. The attached method claims present elements of the various steps in a sample order, and are not meant to be limited to the specific order or hierarchy presented. Further, although method 700 has been described with a certain degree of particularity, it should be recognized that elements thereof may be altered by persons skilled in the art without departing from the spirit and scope of the invention. One of the embodiments of the invention can be implemented as sets of instructions resident in the main memory of one or more information handling systems configured generally as described in FIG. 8. Until required by the information handling system, the set of instructions may be stored in another computer readable memory such as the auxiliary memory of FIG. 8, for example in a hard disk drive or in a removable memory such as an optical disk for utilization in a CD-ROM drive, a floppy disk for utilization in a floppy disk drive, a floptical disk for utilization in a floptical drive, or a personal computer memory card for utilization in a personal computer card slot. Further, the set of instructions can be stored in the memory of another information handling system and transmitted over a local area network or a wide area network, such as the Internet, when desired by the user. Additionally, the instructions may be transmitted over a network in the form of an applet that is interpreted after transmission to the computer system rather than prior to transmission. One skilled in the art would appreciate that the physical storage of the sets of instructions or applets physically changes the medium upon which it is stored electrically, magnetically, chemically, physically, optically or holographically so that the medium carries computer readable information.

Referring now to FIG. 8, an exemplary hardware system generally representative of the information handling system 108 illustrated in FIGS. 1 through 3 is described. The hardware system 800 is controlled by a central processing system 802. The central processing system 802 includes a central processing unit such as a microprocessor or microcontroller for executing programs, performing data manipulations and controlling the tasks of the hardware system 800. Communication with the central processor 802 is implemented through a system bus 810 for transferring information among the components of the hardware system 800. The bus 810 may include a data channel for facilitating information transfer between storage and other peripheral components of the hardware system. The bus 810 further provides the set of signals required for communication with the central processing system 802 including a data bus, address bus, and control bus. The bus 810 may comprise any state of the art bus architecture according to promulgated standards, for example industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and so on. Other components of the hardware system 800 include main memory 804, and auxiliary memory 806. The hardware system 800 may further include an auxiliary processing system 808 as required. The main memory 804 provides storage of instructions and data for programs executing on the central processing system 802. The main memory 804 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and so on. The auxiliary memory 806 provides storage of instructions and data that are loaded into the main memory 804 before execution. The auxiliary memory 806 may include semiconductor based memory such as read-only memory (ROM), programmable read-only memory (PROM), erasable programmable read-only memory (EPROM), electrically erasable read-only memory (EEPROM), or flash memory (block oriented memory similar to EEPROM). The auxiliary memory 806 may also include a variety of non-semiconductor-based memories, including but not limited to magnetic tape, drum, floppy disk, hard disk, optical, laser disk, compact disc read-only memory (CD-ROM), write once compact disc (CD-R), rewritable compact disc (CD-RW), digital versatile disc read-only memory (DVD-ROM), write once DVD (DVD-R), rewritable digital versatile disc (DVD-RAM), etc. Other varieties of memory devices are contemplated as well. The hardware system 800 may optionally include an auxiliary processing system 808 which may be an auxiliary processor to manage input/output, an auxiliary processor to perform floating point mathematical operations, a digital signal processor (a special-purpose microprocessor having an architecture suitable for fast execution of signal processing algorithms), a back-end processor (a slave processor subordinate to the main processing system), an additional microprocessor or controller for dual or multiple processor systems, or a coprocessor. It will be recognized that such auxiliary processors may be discrete processors or may be built in to the main processor.

The hardware system 800 further includes a display system 812 for connecting to a display device 814, and an input/output (I/O) system 816 for connecting to one or more I/O devices 818, 820, and up to N number of I/O devices 822. The display system 812 may comprise a video display adapter having all of the components for driving the display device, including video memory, buffer, and graphics engine as desired. Video memory may be, for example, video random access memory (VRAM), synchronous graphics random access memory (SGRAM), windows random access memory (WRAM), and the like. The display device 814 may comprise a cathode ray-tube (CRT) type display such as a monitor or television, or may comprise an alternative type of display technology such as a projection-type CRT display, a liquid-crystal display (LCD) overhead projector display, an LCD display, a light-emitting diode (LED) display, a gas or plasma display, an electroluminescent display, a vacuum fluorescent display, a cathodoluminescent (field emission) display, a plasma-addressed liquid crystal (PALC) display, a high gain emissive display (HGED), and so forth. The input/output system 816 may comprise one or more controllers or adapters for providing interface functions between the one or more I/O devices 818-822. For example, the input/output system 816 may comprise a serial port, parallel port, universal serial bus (USB) port, IEEE 1394 serial bus port, infrared port, network adapter, printer adapter, radio-frequency (RF) communications adapter, universal asynchronous receiver-transmitter (UART) port, etc., for interfacing between corresponding I/O devices such as a keyboard, mouse, trackball, touchpad, joystick, trackstick, infrared transducers, printer, modem, RF modem, bar code reader, charge-coupled device (CCD) reader, scanner, compact disc (CD), compact disc read-only memory (CD-ROM), digital versatile disc (DVD), video capture device, TV tuner card, touch screen, stylus, electroacoustic transducer, microphone, speaker, audio amplifier, etc. The input/output system 816 and I/O devices 818-822 may provide or receive analog or digital signals for communication between the hardware system 800 of the present invention and external devices, networks, or information sources. The input/output system 816 and I/O devices 818-822 preferably implement industry promulgated architecture standards, including Ethernet IEEE 802 standards (e.g., IEEE 802.3 for broadband and baseband networks, IEEE 802.3z for Gigabit Ethernet, IEEE 802.4 for token passing bus networks, IEEE 802.5 for token ring networks, IEEE 802.6 for metropolitan area networks, and so on), Fibre Channel, digital subscriber line (DSL), asymmetric digital subscriber line (ASDL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on. It should be appreciated that modification or reconfiguration of the hardware system 800 of FIG. 8 by one having ordinary skill in the art would not depart from the scope or the spirit of the present invention.

As utilized herein, the term "physical model" is defined simply as any construction of two or more construction elements 102. Physical models 104 in accordance with the present invention include models of real physical structures that either already exist or are capable of being built (e.g., buildings, vehicles, ships, etc.), persons, plants, animals, imagined creatures (e.g., dragons, unicorns, monsters, etc.), or abstract creations (e.g., artistic sculptures, clothing designs, etc.), or the like. The term "virtual model" is defined as a displayed image rendered by a program of instructions executed by an information handling system such as a computer system, server, information appliance, or the like (FIG. 8). Such virtual models are often referred to in the art as computer graphics or computer models and may be either two-dimensional or three-dimensional. The virtual model may be an identical copy of the physical model or an abstraction of the physical model depending on the specific requirements of the invention as described herein.

It is believed that the system and method of the present invention and many of their attendant advantages will be understood by the forgoing description, and it will be apparent that various changes may be made in the form, construction and arrangement of the components thereof without departing from the scope and spirit of the invention or without sacrificing all of its material advantages, the form herein before described being merely an explanatory embodiment thereof. It is the intention of the following claims to encompass and include such changes.

## Claims

1. A system for rendering a virtual model representing a physical model, comprising:
a first construction element suitable for assembly into the physical model, the first construction element including a memory for storing an identification of the first construction element; and
a controller for detecting a connection of the first construction element with a second construction element and communicating the identification of the first construction element and the associated connection of the first construction element to the second construction element to an information handling system,
wherein the information handling system is capable of executing a program of instruction for generating the virtual model using the communicated identification of the first construction element and the associated connection of the first construction element to the second construction element.

2. The system as claimed in claim 1, wherein the first construction element comprises a connector for providing the connection between the first construction element and the second construction element, the connector being coded for identification of the connection by the controller;
optionally, further comprising a power source for providing electrical power to the memory of the first construction element and the controller;
optionally, further comprising a transmitter and receiver for communicating the identification of the first construction element and the associated connection of the first construction element to the second construction element to an information handling system;
optionally, wherein the controller is disposed in the first construction element; and
optionally, wherein the first construction element further comprises a power source for providing electrical power to the memory and the controller.

3. The system as claimed in claim 1, wherein the controller is disposed in a bus construction element to which at least one of the first construction element and the second construction element are connected;
optionally, wherein the first construction element comprises a connector for providing the connection between the first construction element and the second construction element, the connector being coded for identification of the connection by the controller;
optionally, further comprising a transmitter disposed in the bus construction element and coupled to the controller and receiver coupled to the information handling system, the transmitter and receiver being suitable for communicating the identification of the first construction element and the associated connection of the first construction element to the second construction element to the information handling system; and
optionally, wherein the bus construction element further comprises a power source for providing electrical power to the memory of the first construction element, the controller, and the transmitter.

4. The system as claimed in claim 1, wherein the first construction element comprises a sensor for sensing at least one of orientation, movement, speed, and acceleration of the first construction element, and wherein the controller communicates the sensed orientation, movement, speed, or acceleration of the first construction element to the information handling system for animation of the virtual model.

5. The system as claimed in claim 1, wherein the first construction element comprises a first component, a second component movably coupled to the first component so as to be capable of movement with respect to the first component, and a sensor for sensing at least one of orientation, movement, speed, and acceleration of the second component with respect to the first component, and wherein the controller communicates the sensed orientation, movement, speed, or acceleration of the second component with respect to the first component to the information handling system for animation of the virtual model.

6. The system as claimed in claim 1, wherein the memory of the first construction element further stores an attribute to be associated with the first construction element in the virtual model.

7. A construction element suitable for assembly into a physical model, comprising:
a memory device for storing an identification of the first construction element; and
a connector for connection of the construction element with a second construction element,
wherein connection of the first construction element with the second construction element is detected and the identification of the first construction element and the associated connection of the first construction element to the second construction element is communicated to an information handling system capable of executing a program of instructions for using the communicated identification of the first construction element and the associated connection of the first construction element to the second construction element for generation of a virtual model representing the physical model.

8. The construction element as claimed in claim 7, further comprising a controller for detecting connection of the first construction element with the second construction element and communicating the identification of the first construction element and the associated connection of the first construction element to the second construction element is communicated to the information handling system;
optionally, further comprising a transmitter for communicating the identification of the first construction element and the associated connection of the first construction element to the second construction element to the information handling system; and
optionally, wherein the bus construction element further comprises a power source for providing electrical power to at least one of the memory, the controller, and the transmitter.

9. The construction element as claimed in claim 7, further comprising a sensor for sensing at least one of the orientation, movement, speed, and acceleration of the construction element, wherein the sensed orientation, movement, speed, or acceleration of the construction element is communicated to the information handling system for animation of the virtual model;
optionally, further comprising a first component, a second component movably coupled to the first component so as to be capable of movement with respect to the first component, and a sensor for sensing at least one of orientation, movement, speed, and acceleration of the second component with respect to the first component, wherein the sensed orientation, movement, speed, or acceleration of the second component with respect to the first component is communicated to the information handling system for animation of the virtual model; and
optionally, wherein the memory further stores an attribute to be associated with the first construction element in the virtual model.

10. A system for rendering a virtual model representing a physical model, comprising:
means for providing an identification of a construction element of the physical model;
means for detecting the connection of the construction element with a second construction element, the connection being associated with the identification of the construction element; and
means for communicating the identification of the construction element and the associated connection to an information handling system,
wherein the communicated identification and associated connection are utilized for generating the virtual model.

11. The system as claimed in claim 10, further comprising means for providing electrical power to the construction element;
optionally, further comprising means for sensing at least one of orientation, movement, speed, and acceleration of the construction element, wherein the sensed orientation, movement, speed, or acceleration of the construction element are communicated to the information handling system for animation of the virtual model;
optionally, wherein the construction element comprises a first component, a second component movably coupled to the first component so as to be capable of movement with respect to the first component, and means for sensing at least one of orientation, movement, speed, and acceleration of the second component with respect to the first component; and
optionally, further comprising means for storing an attribute to be associated with the construction element in the virtual model.

12. A method for rendering a virtual model using a plurality of construction elements capable of being assembled into a physical model, comprising:
obtaining an identification of at least one construction element of the physical model, the identification being provided by the at least one construction element;
detecting the connection of the identified construction element with a second construction element within the physical model, the connection being associated with the identified construction element;
communicating the identification of the construction element and the associated connection to an information handling system;
generating the virtual model the utilizing the communicated identity and associated connection.

13. The method as claimed in claim 12, further comprising sensing at least one of orientation, movement, speed, and acceleration of the at least one construction element, wherein the sensed orientation, movement, speed, or acceleration are communicated to the information handling system for animation of the virtual model; and
optionally, further comprising obtaining an attribute from the construction element to be associated with the construction element in the virtual model.

14. A method for rendering a virtual model using a plurality of construction elements capable of being assembled into a physical model, comprising:
assembling at least selected ones of the plurality of construction elements into a physical model; and
generating the virtual model representing the physical model,
wherein connection of the assembled construction elements with one another is detected and information identifying the construction elements and the their associated connections with each other is communicated to an information handling system capable of executing a program of instructions for using the communicated identification information for generating the virtual model.
